# EUROPÄISCHE PATENTSCHRIFT

(11) **EP 2 822 982 B1**
(45) Veröffentlichungstag und Bekanntmachung des Hinweises auf die Patenterteilung: **13.05.2020**
(21) Anmeldenummer: 13703399.9
(22) Anmeldetag: 08.02.2013
(51) Int. Cl.: C08G 18/00, C08J 9/00, C08K 5/00, C08L 75/00

(54) **ADDITIV ZUR EINSTELLUNG DER GLASÜBERGANGSTEMPERATUR VON VISKOELASTISCHEN POLYURETHANWEICHSCHAUMSTOFFEN**
ADDITIVE FOR ADJUSTING THE GLASS TRANSITION TEMPERATURE OF VISCO-ELASTIC POLYURETHANE SOFT FOAMS
ADDITIF POUR LE RÉGLAGE DE LA TEMPÉRATURE DE TRANSITION VITREUSE DE MOUSSES DE POLYURÉTHANE SOUPLES VISCOÉLASTIQUES

(30) Priorität: 08.03.2012 DE 102012203639
(43) Veröffentlichungstag der Anmeldung: 14.01.2015
(73) Patentinhaber: Evonik Operations GmbH, 45128 Essen (DE)
(72) Erfinder: LANDERS, Rüdiger, 45257 Essen (DE); HUBEL, Roland, 45136 Essen (DE)
(74) Vertreter: Evonik Patent Association
(86) Internationale Anmeldenummer: PCT/EP2013/052516
(87) Internationale Veröffentlichungsnummer: WO 2013/131710

(56) Entgegenhaltungen:
- DE-C1- 4 029 081
- US-A- 4 444 914

## Beschreibung

Der Gegenstand der vorliegenden Patentanmeldung betrifft die Verwendung eines Disalzes der Äpfelsäure bei der Herstellung von Polyurethanschaum, wobei das Disalz der Äpfelsäure der Reaktionsmischung, welche zumindest eine Polyolkomponente, eine Isocyanatkomponente, einen Katalysator, der die Ausbildung einer Urethan- oder Isocyanurat-Bindung katalysiert, ein Treibmittel, gegebenenfalls weitere Additive aufweist, zugegeben wird, zur Absenkung der Glasübergangstemperatur des erhaltenen Polyurethanschaums dient, sowie die entsprechend hergestellten Polyurethanschäume.

### Stand der Technik:

Polyurethanweichschäume finden heute vielfältige Verwendung zur Herstellung von Matratzen, Polstermöbeln oder Autositzen. Ihre Herstellung erfolgt durch Umsetzung von Isocyanaten mit Polyolen und Wasser. Als Additive werden dabei üblicherweise Katalysatoren (Aminkatalysatoren und Zinnkatalysatoren) und/oder Schaumstabilisatoren eingesetzt. Zusätzlich zum chemischen Treibmittel Wasser können auch physikalische Treibmittel eingesetzt werden.

Es ist bekannt, als Additive bei der Herstellung von Polyurethanschäumen Hydroxycarbonsäuren oder deren Salze zu verwenden.

So beschreibt EP 0 075 424 die Verwendung einer Zusammensetzung, die Polyurethanschäumen zugegeben werden soll und die Bildung von Rauch und toxischen Gasen bei der Verbrennung von Polyurethanschäumen vermeiden helfen soll, die als Kohlestabilisierende Komponente Wein- oder Äpfelsäure aufweist. Das Additiv kann bei der Herstellung des Schaums zugegeben werden, wobei aber bevorzugt der fertige Polyurethanschaum mit der Zusammensetzung imprägniert wird. Die bevorzugte Menge an eingesetzter Äpfelsäure bezogen auf den Polyurethanschaum wird mit 5 % angegeben.

In JP 63301293 wird die Herstellung von Polyurethanschäumen unter Zugabe von Zitronensäure beschrieben. Durch die Zugabe der Zitronensäure soll die Zersetzung/Verrottung des Materials vermieden werden.

In EP 0 475 242 wird ein Verfahren zur Herstellung von flexiblen Polyurethanweichschäumen beschrieben, bei dem die Verwendung von physikalischen Treibmitteln, insbesondere von Fluorchlorkohlenwasserstoffen und Methylenchlorid vermieden oder zumindest erheblich eingeschränkt werde soll. Diese Aufgabe wird dort durch die Verwendung von 0,1 bis 1 Gew.-Teilen bezogen auf 100 Gew.-Teile Polyol an Alkali- oder Erdalkalisalzen einer Hydroxycarbonsäure gelöst. Als Hydroxycarbonsäuren werden insbesondere Äpfelsäure, Weinsäure, Zitronensäure und Milchsäure genannt.

Ein besonderes Segment der Polyurethanweichschaumstoffe stellen die sogenannten viskoelastischen Schaumstoffe dar. Die charakteristischen Eigenschaften der viskoelastischen Polyurethanweichschaumstoffe sind eine verzögerte Rückkehr in die Originalform nach einer Deformation und eine niedrige Rückprallelastizität. Die Rückkehr eines deformierten Schaummusters in die Originalform benötigt dabei mehrere Sekunden. Die Rückprallelastizität ist kleiner als 10%, gemessen im Kugelfallversuch gemäß DIN EN ISO 8307. Standard-Polyurethanweichschäume würden dagegen innerhalb von Zeiträumen deutlich unter einer Sekunde in die Ursprungsform zurückkehren und hätten eine Rückprallelastizität von ca. 30 bis 60%.

Diese Eigenschaften der viskoelastischen Polyurethanweichschaumstoffe werden erzielt durch eine ungewöhnlich hohe Glasübergangstemperatur. Diese liegt bei viskoelastischen Schaumstoffen zwischen -20 und +15 °C. Die Glasübergangstemperatur von Standard-Polyurethan-Weichschäumen dagegen regelmäßig bei unter -35°C. Gemessen werden kann die mittlere Glasübergangstemperatur dabei mittel Dynamisch Mechanischer Analyse (DMA) (DIN 53513) oder mittels Differentieller Kalorimetrie (DSC) (ISO 11357-2). Dabei handelt es sich genau genommen um einen Glasübergangsbereich, der sich über einen Temperaturbereich erstreckt. Die im Folgenden genannten Glasübergangstemperaturen stellen Mittelwerte dar. Bedingt durch die hohe Glasübergangstemperatur der viskoelastischen Weichschaumstoffe sind bei Raumtemperatur immer noch einige Netzwerksegmente in dem Polyurethannetzwerk eingefroren und in ihrer Mobilität eingeschränkt. Dadurch wird die Elastizität des gesamten Polyurethan-Netzwerkes beeinflusst und ein zeitverzögertes Verhalten wird hervorgerufen. Dieses mechanische Verhalten ist vorteilhaft für spezielle Anwendungen in dem Bereich der Komfortschäume. Besonders für Matratzen in Krankenhäusern und für Kopfkissen werden gerne viskoelastische Polyurethanweichschäume eingesetzt, da das Körpergewicht über eine größere Fläche verteilt wird und dementsprechend das Auftreten von Druckstellen bei dauerhaftem Liegen reduziert wird.

Polyetherpolyolmischungen, die für die Produktion viskoelastischer Polyurethanschaumstoffe eingesetzt werden, beinhalten oft mehrere Polyole. Dabei hat wenigstens eines der Polyole eine relativ hohe OH-Zahl (>100 mg KOH/g). Dadurch wird die Dichte an Netzwerkknotenpunkten angehoben und die Glasübergangstemperatur zu höheren Werten verschoben. Parallel müssen dann durch Absenkung des Index oder den Einsatz von Monoolen die gewünschten mechanischen Eigenschaften des Schaumstoffs eingestellt werden. Details hierzu erschliessen sich aus der Literatur u. a. WO01/57104A2; DE3942330A2; S. Hager, R. Skorpenske, S. Triouleyre, F. Joulak, "New Technology for Viscoelastic Foam", Journal of Cellular Plastics, Volume 37 - September/October 2001 p. 377, und S. Kintrup, J.P. Treboux, H. Mispreuve, "Low Resilience - High Performance Recent Advances in Viscoelastic Flexible Slabstock Foam", Proceedings of the Polyurethanes Conference, 2000, October 8-11, Boston, MA.

Die mechanischen Eigenschaften solcher viskoelastischen Weichschaumstoffe hängen dabei von der Umgebungstemperatur ab. Bei hohen Umgebungstemperaturen (>30°C) wird der Schaumstoff sehr weich und der viskoelastische Effekt geht verloren. Grund dafür ist, dass nun fast alle Netzwerksegmente mobil sind. Bei tiefen Temperaturen (< 15°C) wird der Schaum hart und zu viskoelastisch (kein oder extrem langsame Rückstellung nach Deformation). Grund ist, dass nun zu viele Kettensegmente eingefroren sind. Anpassungen der Herstellformulierungen von viskoelastischen Schaumstoffen an die klimatischen Gegebenheiten des jeweiligen Absatzmarktes sind daher wichtig. Die Einstellung der viskoelastischen Eigenschaften erfolgt dabei über eine Verschiebung der Glasübergangstemperatur. Geringfügige Änderungen der Glasübergangstemperatur beeinflussen dabei direkt die mechanischen Eigenschaften des gebildeten Schaumstoffs. Der übliche Weg zur Modifikation der Glasübergangstemperatur ist entweder die Variation der Vemetzungsdichte des Polyurethannetzwerkes oder die Variation der chemischen Zusammensetzung der Netzwerksegmente. Ersteres kann bei Polyurethanweichschäumen leicht durch Variation des Verhältnis von Isocyanatgruppen zu isocyanatverbrauchenden Gruppen ("Index") eingestellt werden. Des Weiteren kann die Funktionalität diverser multifunktioneller Verbindung genutzt werden, um durch ihren Zusatz die Glasübergangstemperatur zu verschieben. Vernetzende Komponenten (Funktionalität > 2) erhöhen dabei die Glasübergangstemperatur während Komponenten mit einer Funktionalität < 2 die Vemetzungsdichte senken.

Chemische Modifikationen der Netzwerkstruktur betreffen vor allem die Kettenlänge der verwendeten Polyole und der für die Herstellung eingesetzten Monomere. Alle diese Modifikationen haben den Nachteil, dass relativ große Veränderungen an den Formulierungen vorgenommen werden müssen. Dadurch ändern sich neben der Glasübergangstemperatur aber auch viele weitere Parameter, wie Steigzeiten bei der Verschäumung, Luftdurchlässigkeit, Rückfall oder die Zellstruktur. Dies macht derartige Änderungen der Vemetzungsdichte zu einem komplexen Vorhaben.

Aufgabe der vorliegenden Erfindung war deshalb die Bereitstellung eines Additivs, welches bereits in relativ geringer Einsatzmenge zugesetzt, die Glasübergangstemperatur in gewünschter Weise verschiebt. Die Wirksamkeit sollte dabei vorzugsweise deutlich stärker sein, als die durch die üblicherweise eingesetzten Vernetzer oder niederfunktionellen Zusätze erreichte.

Überraschenderweise wurde gefunden, dass die Verwendung von Disalzen der Äpfelsäure bei der Herstellung von Polyurethanschäumen diese Aufgabe löst.

Gegenstand der vorliegenden Erfindung ist deshalb ein Verfahren zur Herstellung von Polyurethanschaum mit einer abgesenkten Glasübergangstemperatur durch Umsetzung einer Polyolkomponente mit einer Isocyanatkomponente, welches dadurch gekennzeichnet ist, dass die Umsetzung in Gegenwart eines Disalzes der Äpfelsäure erfolgt, bzw. die Verwendung eines Disalzes der Äpfelsäure bei der Herstellung von Polyurethanschaum, wobei das Disalz der Äpfelsäure der Reaktionsmischung, welche zumindest eine Polyolkomponente, eine Isocyanatkomponente, einen Katalysator, der die Ausbildung einer Urethan- oder Isocyanurat-Bindung katalysiert, ein Treibmittel und gegebenenfalls weitere Additive aufweist, zugegeben wird, zur Absenkung der Glasübergangstemperatur des erhaltenen Polyurethanschaums.

Ebenfalls Gegenstand der vorliegenden Erfindung ist ein Polyurethanschaum mit einer Glasübergangstemperatur von -20 °C bis 15 °C, welcher dadurch gekennzeichnet ist, dass er Disalze der Äpfelsäure oder deren Umsetzungsprodukte mit einer Isocyanatkomponente aufweist, wobei der Anteil der Disalze und deren Umsetzungsprodukte mit einer Isocyanatkomponente (in Summe) kleiner 0,08 Gew.-% bezogen auf den Polyurethanschaum beträgt.

Im Vergleich zu einer monofunktionellen Vergleichssubstanz (n-Butanol), bei der für 0,1 Massenteile bezogen auf 100 Massenteile Polyolkomponente eine Absenkung um 0,3°C beobachtet wurde, wurde bei dem Einsatz von 0,12 Massenteilen Dinatriummalat bezogen auf 100 Massenteile Polyolkomponente eine Absenkung der Glasübergangstemperatur von 5,5 °C beobachtet. Damit weisen die Disalze der Äpfelsäure den Vorteil auf, dass mit einer sehr geringen Menge an Disalz bereits eine große Verschiebung der Glasübergangstemperatur erreicht werden kann. Difunktionelle Vergleichssubstanzen (z.B. Propylenglykol) verändern die Glasübergangstemperatur entweder nicht oder nur geringfügig. Trifunktionelle, d.h. also vernetzende Substanzen (z.B. Glyzerin) machen das Polyurethannetzwerk unflexibler und erhöhen damit die Glasübergangstemperatur. Disalze der Äpfelsäure stellen daher eine sehr effiziente und einfache Möglichkeit dar, die Glasübergangstemperatur abzusenken.

Die Disalze sind im Regelfall gut wasserlöslich, weshalb sich einfach homogene Lösungen der Salze der Äpfelsäure herstellen lassen. Solche Lösungen können alternativ zu den reinen Salzen der Äpfelsäure eingesetzt werden, da solche Lösungen einfacher zu der Reaktionsmischung zuzugeben und zu vermischen sind.

Der erfindungsgemäße Polyurethanschaum hat den Vorteil, dass er eine Rückprallelastizität von kleiner 10 % aufweist und somit als viskoelastischer Polyurethanschaum eingesetzt werden kann.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Die erfindungsgemäße Verwendung eines Disalzes der Äpfelsäure bei der Herstellung von Polyurethanschaum zeichnet sich dadurch aus, dass das Disalz der Äpfelsäure der Reaktionsmischung, welche zumindest eine Polyolkomponente, eine Isocyanatkomponente, einen Katalysator, der die Ausbildung einer Urethan- oder Isocyanurat-Bindung katalysiert, ein Treibmittel und gegebenenfalls weitere Additive aufweist, zur Absenkung der Glasübergangstemperatur des erhaltenen Polyurethanschaums zugegeben wird.

Unter Polyurethanschaum (PU-Schaum) wird im Rahmen der vorliegenden Erfindung Schaum verstanden, der als Reaktionsprodukt basierend auf di- oder polyfunktionellen Isocyanaten und Polyolen bzw. Verbindungen mit Isocyanat-reaktiven Gruppen erhalten wird. Es können hierbei neben dem Namen gebenden, Polyurethan auch weitere funktionelle Gruppen gebildet werden, wie z.B. Allophanate, Biurete, Harnstoffe oder Isocyanurate. Daher werden unter PU-Schäumen im Sinne der vorliegenden Erfindung sowohl Polyurethanschäume (PUR-Schäume) als auch Polyisocyanurat-Schäume (PIR-Schäume) verstanden. Als Treibmittel kann Wasser eingesetzt werden. Hierbei wird Kohlendioxid und das korrespondierende Amin gebildet, welches mit weiterem Isocyanat zu einer Harnstoffgruppe reagiert. Der Polyurethanschaum kann dabei auch mehrheitlich durch Harnstoffgruppen neben Urethangruppen aufgebaut werden. Bevorzugte Polyurethanschäume sind viskoelastische Polyurethanweichschäume.

Unter Äpfelsäure wird im Rahmen der vorliegenden Anmeldung Hydroxybernsteinsäure (auch Hydroxybutansäure genannt) verstanden. Als Disalz der Äpfelsäure können die Disalze aller isomeren Formen der Äpfelsäure, also die L- oder die D-Form oder beliebige Mischungen davon eingesetzt werden. Vorzugsweise wird das Disalz des Racemats der Hydroxybernsteinsäure oder das Disalz der natürlich vorkommenden bzw. biotechnologisch hergestellten L-Hydroxybernsteinsäure eingesetzt. Bevorzugt wird als Disalz der Äpfelsäure das Disalz der L-Hydroxybernsteinsäure eingesetzt, welches aus nachwachsenden Rohstoffen gewonnen werden kann bzw. aus nachwachsenden Rohstoffen erhalten wurde.

Als Salze der Äpfelsäure werden vorzugsweise die Disalze eingesetzt, bei denen also bei beiden Säuregruppen das Proton durch ein anderes Kation ersetzt worden ist. Als Kationen weisen die erfindungsgemäß eingesetzten Salze der Äpfelsäure vorzugsweise Ammonium-, Alkali- oder Erdalkali-Kationen auf. Bevorzugte Salze der Äpfelsäure weisen als Kationen Ammonium-, Natrium, und/oder Kalium-Ionen auf. In den eingesetzten Disalzen der Äpfelsäure können die beiden Kationen von gleichem oder unterschiedlichem Typ sein. Vorzugsweise werden Disalze der Äpfelsäure eingesetzt, bei denen beide Kationen vom selben Typ, insbesondere beide Kationen Natriumkationen sind. Besonders bevorzugt wird deshalb als Disalz der Äpfelsäure das Dinatriumsalz eingesetzt.

Besonders bevorzugt werden als Salz der Äpfelsäure die Dinatriumsalze des Hydroxybemsteinsäureracemats oder der L-Hydroxybernsteinsäure, vorzugsweise die Dinatriumsalze der L-Hydroxybernsteinsäure, bevorzugt einer L-Hydroxybernsteinsäure, welche aus nachwachsenden Rohstoffen gewonnen werden kann bzw. aus nachwachsenden Rohstoffen erhalten wurde, eingesetzt.

Das Disalz der Äpfelsäure wird vorzugsweise in einer Konzentration von größer 0 bis kleiner 1 Massen-Teilen, bevorzugt größer 0 bis kleiner 0,5 Massen-Teilen, besonders bevorzugt von größer 0 bis kleiner 0,1 Massen-Teilen und ganz besonders bevorzugt von größer 0,001 bis kleiner 0,09 Massen-Teilen bezogen auf 100 Massen-Teile Polyolkomponente zugegeben.

Es kann vorteilhaft sein, wenn das Disalz der Äpfelsäure in Form einer vorzugsweise 1 bis 50 Gew.-%igen, bevorzugt 5 bis 25 Gew.-%igen Lösung des Disalzes in vorzugsweise Wasser, Dipropylenglykol, Propylenglykol, Butyldiglykol, Ethanol, Isopropanol, Ethylenglykol, Diethylenglykol, Polyether und/oder Polyol, bevorzugt in Wasser und/oder Dipropylenglykol, dem Reaktionsgemisch zugegeben wird. Besonders bevorzugt ist der Einsatz des Disalzes der Äpfelsäure in Form einer 1 bis 50 Gew.-%igen, bevorzugt 5 bis 25 Gew.-%igen Lösung des Disalzes in einer Mischung enthaltend Wasser und Dipropylenglykol in einem Massenverhältnis von 0,5 zu 1 bis 1 zu 0,5.

Die Herstellung des Polyurethanschaums, bei der erfindungsgemäß das Disalz der Apfelsäure verwendet wird, kann auf eine dem Fachmann bekannt Weise erfolgen. Eine grundsätzliche Übersicht findet sich u. a. in G. Oertel, Polyurethane Handbook, 2nd edition, Hanser/Gardner Publications Inc., Cincinnati, Ohio, 1994, p. 177-247) und in D. Randall und S. Lee (beide Hrsg.): "The Polyurethanes Book" J. Wiley, 1. Auflage, 2002.

### Polyolkomponente

Als Polyolkomponenten können in der Reaktionsmischung alle Polyole wie sie aus dem Stand der Technik bekannt sind, vorhanden sein. Zur Vermeidung von Missverständnissen sei an dieser Stelle darauf verwiesen, dass im Rahmen der vorliegenden Anmeldung unter Polyolen Verbindungen verstanden werden, die mindestens zwei gegenüber Isocyanatgruppen reaktive H-Atome aufweisen, insbesondere also Diole, Triole etc.. Als Polyolkomponente werden vorzugsweise Polyetherpolyole eingesetzt. Solche Polyetherpolyole können nach bekannten Verfahren, hergestellt werden, beispielsweise durch anionische Polymerisation von Alkylenoxiden in Gegenwart von z. B. Alkalihydroxiden oder Alkalialkoholaten als Katalysatoren und unter Zusatz mindestens eines Startermoleküls, das 2 oder mehr, insbesondere 2 oder 3 reaktive Wasserstoffatome gebunden enthält oder durch kationische Polymerisation von Alkylenoxiden, vorzugsweise in Gegenwart von Lewis-Säuren als Katalysatoren, wie beispielsweise Antimonpentachlorid oder Borfluorid-Etherat oder durch Doppelmetallcyanidkatalyse. Geeignete Alkylenoxide enthalten vorzugsweise 2 bis 4 Kohlenstoffatome im Alkylenrest. Beispiele sind Tetrahydrofuran, 1,3-Propylenoxid, 1,2- bzw. 2,3-Butylenoxid; vorzugsweise werden Ethylenoxid und/oder 1,2-Propylenoxid eingesetzt. Die Alkylenoxide können einzeln, alternierend nacheinander oder als Mischungen verwendet werden. Als Startermolekül kommen insbesondere Wasser oder 2- und 3-wertige Alkohole in Betracht, wie Ethylenglykol, Propandiol-1,2 und -1,3, Diethylenglykol, Dipropylenglykol, Glycerin, Trimethylolpropan usw. Auch mehrfach- bzw. polyfunktionelle Polyole, wie Zucker, können als Starter eingesetzt werden.

Als Polyolkomponenten sind in der Reaktionsmischung vorzugsweise Polyetherpolyole, bevorzugt Polyoxypropylen-polyoxyethylen-polyole, die eine Funktionalität (Anzahl der aktiven H-Atome, insbesondere Anzahl der OH-Gruppen) von 2 bis 5 und zahlengemittelte Molekulargewichte im Bereich von 500 bis 8000, vorzugsweise 800 bis 3500 aufweisen, vorhanden. Vorzugsweise ist in der Polyolkomponente wenigstens ein Polyol anwesend, welches eine relativ hohe OH-Zahl von >100 mg KOH/g, bestimmt gemäß DIN 53240, aufweist.

### Isocyanatkomponente

Als Isocyanatkomponente können alle Isocyanate, insbesondere die an sich bekannten aliphatischen, cycloaliphatischen, araliphatischen und vorzugsweise aromatischen mehrwertigen Isocyanate in der Reaktionsmischung vorhanden sein. Im einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4 und vorzugsweise Hexamethylendiisocyanat-1,6, cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie beispielsweise 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden. Besonders bevorzugt werden Gemische aus Polyphenylpolymethylenpolyisocyanat mit Diphenylmethandiisocyanat, wobei vorzugsweise der Anteil an 2,4'-Diphenylmethandiisocyanat > 30 Gew.-% bezogen auf die Isocyanatkomponente beträgt.

Es kann vorteilhaft sein, wenn auch sogenannte modifizierte mehrwertige Isocyanate, d. h. Produkte, die durch chemische Umsetzung organischer Di- und/oder Polyisocyanate erhalten werden, in der Isocyanatkomponente vorhanden sind. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: modifiziertes 4,4'-Diphenylmethandiisocyanat, modifizierte 4,4'- und 2,4'-Diphenylmethandiisocyanatmischungen, modifiziertes Roh-MDI oder 2,4- bzw. 2,6-Toluylendiisocyanat, Urethangruppen enthaltende organische, vorzugsweise aromatische Polyisocyanate mit NCO-Gehalten von 43 bis 15 Gew.-%, vorzugsweise von 31 bis 21 Gew.-%, bezogen auf das Gesamtgewicht, beispielsweise Umsetzungsprodukte mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, wobei diese als Di- bzw. Polyoxyalkylenglykole einzeln oder als Gemische eingesetzt werden können. Beispielsweise genannt seien: Diethylen-, Dipropylenglykol, Polyoxyethylen-, Polyoxypropylen- und Polyoxypropylenpolyoxyethenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'-und 4,4'-Diphenylmethandiisocyanat, 2,4- und/oder 2,6-Toluylendiisocyanaten oder Roh-MDI. Bewährt haben sich ferner flüssige, Carbodiimidgruppen und/oder Isocyanuratringe enthaltende Polyisocyanate mit NCO-Gehalten von 43 bis 15, vorzugsweise 31 bis 21, Gew.-%, bezogen auf das Gesamtgewicht, beispielsweise auf Basis von 4,4'-, 2,4'- und/oder 2,2'-Diphenylmethandiisocyanat und/oder 2,4- und/oder 2,6-Toluylendiisocyanat.

Die modifizierten Polyisocyanate können miteinander oder mit unmodifizierten organischen Polyisocyanaten, wie beispielsweise 2,4'-, 4,4'-Diphenylmethandiisocyanat, Roh-MDI, 2,4- und/oder 2,6-Toluylendiisocyanat, gemischt werden.

Besonders bewährt haben sich als organische Polyisocyanate und kommen daher vorzugsweise zur Anwendung: Toluylendiisocyanat, Gemische aus Diphenylmethandiisocyanat-Isomeren, Gemische aus Diphenylmethandiisocyanat und Polyphenylpolymethylpolyisocyanat oder Toluoldiisocyanat mit Diphenylmethandiisocyanat und/oder Polyphenylpolymethylpolyisocyanat oder sogenannte Prepolymere. Bevorzugt ist im Reaktionsgemisch als Isocynatkomponente im Wesentlichen nur Toluylendiisocyanat vorhanden, wobei im Wesentlichen hierbei einen Anteil von mindestens 95 Gew.-% bezogen auf die Isocynatkomponente bedeutet.

Besonders bevorzugt wir als Isocyanatkomponente Gemische von 2,4-Toluylendiisocyanat mit 2,6-Toluylendiisocyanat mit einem Anteil an 2,4-Toluylendiisocyanat von 80 Gew.-% eingesetzt.

Besonders bevorzugt wird die Menge der als Isocyanatkomponente im Reaktionsgemisch vorhandenen Isocyanate so gewählt, dass das molare Verhältnis von vorhandenen Isocynatgruppen zu in der Reaktionsmischung vorhandenen aktiven H-Atomen, insbesondere OH-Grupppen, von 80 bis 120 zu 100 beträgt.

### Katalysator, der die Ausbildung einer Urethan- oder Isocyanurat-Bindung katalysiert

Als Katalysator, der die Ausbildung einer Urethan- oder Iscyanurat-Bindung katalysiert, weist das Reaktionsgemisch vorzugsweise einen oder mehrere Katalysatoren für die Reaktionen Isocyanat-Polyol und/oder Isocyanat-Wasser und/oder Isocyanat-Trimerisierung geeigneten Katalysator auf. Geeignete Katalysatoren im Sinne dieser Erfindung sind vorzugsweise Katalysatoren, die die Gelreaktion (Isocyanat-Polyol), die Treibreaktion (Isocyanat-Wasser) und/oder die Di- bzw. Trimerisierung des Isocyanats katalysieren.

Bevorzugte in der erfindungsgemäße Zusammensetzung vorhandene Mengen an Katalysatoren richten sich nach dem Typ des Katalysators und liegen üblicherweise im Bereich von 0,05 bis 5 pphp (= Massenteile bezogen auf 100 Massenteile Polyol), bevorzugt bei 0,05 bis 0,5 pphp und ganz besonders bevorzugt bei 0,1 bis 0,3 pphp bzw. 0,1 bis 10 pphp für Kaliumsalze.

Bevorzugte Katalysatoren für die Gelreaktion sind ausgewählt aus der Gruppe der metallorganischen Verbindungen und der Metallsalze folgender Metalle: Zinn, Zink, Wolfram, Eisen, Wismut, Titan. Vorzugsweise werden Katalysatoren aus der Gruppe der Zinncarboxylate, bevorzugt Zinn(2-ethyl-hexanoat), Zinn(isononaoat) oder Zinnricinoleat verwendet. Bevorzugt eingesetzte Katalysatoren sind Zinn-2-ethylhexanoat sowie Zinnverbindungen mit vollständig oder teilweise kovalent angebundenen organischen Reste, wie z. B. Dibutylzinndilaurat.

Bevorzugte Katalysatoren für die Treibreaktion sind ausgewählt aus der Gruppe der tertiären Amine, bevorzugt ausgewählt aus der Gruppe enthaltend oder bestehend aus Triethylendiamin, Triethylamin, Tetramethylbutandiamin, Dimethylcyclohexylamin, Bis(2-dimethylaminoethyl)ether, Dimethylaminoethoxyethanol, Bis(3-dimethylaminopropyl)amin, N,N,N'-Trimethylaminoethylethanolamin, 1,2-Dimethylimidazol, N(3-Aminopropyl)imidazol, 1-Methylimidazol, N,N,N',N'-Tetramethyl-4,4'-diaminodicyclohexylmethan, N,N-Dimethylethanolamin,N,N-Diethylethanolamin, 1,8-Diazabicyclo-5,4,0-undecen, N,N,N',N'-Tetramethyl-1,3-propandiamin, N,N-Dimethylcyclohexylamin, N,N,N',N",N"'-Pentamethyldiethylentriamin, N,N,N',N",N"'-Pentamethyldipropylentriamin, N,N'-Dimethylpiperazin, N-Methylmorpholin, N-Ethylmorpholin, 2,2'-Dimorpholinodiethylether, N,N-Dimethylbenzylamin, N,N',N"-Tris(dimethylaminopropyl)hexahydrotriazin, N,N,N',N'-Tetramethyl-1,6-hexandiamin, Tris(3-dimethylaminopropyl)amin, und Tetramethylpropanamin, sowie der Gruppe der säureblockierten Derivate der tertiären Amine. Bevorzugt wird als Amin Dimethylethanolamin, Triethylendiamin oder Bis(2-dimethylaminoethyl)ether eingesetzt.

Ganz besonders geeignete Katalysatoren sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat und Kaliumsalze wie Kaliumacetat und Kalium-2-ethylhexanoat. Geeignete Katalysatoren sind beispielsweise in EP 1985642, EP 1985644, EP 1977825, US 2008/0234402, EP 0656382 B1, US 2007/0282026 A1 und den darin zitierten Patentschriften genannt.

### Treibmittel

Als chemisches Treibmittel zur Herstellung der Polyurethanheißweichschaumstoffe kann die Reaktionsmischung Wasser aufweisen, das mit den Isocyanatgruppen unter Freisetzung von Kohlendioxid reagiert. Bevorzugt wird Wasser in einer Menge von 0,2 bis 6 Gew.-Teilen (alle Gewichtsteile bezogen auf 100 Gewichtsteile Polyol bzw. Polyolkomponente), insbesondere bevorzugt in einer Menge von 1,5 bis 5,0 Gew.-Teilen verwendet. Gemeinsam mit oder an Stelle von Wasser können auch physikalisch wirkende Treibmittel, beispielsweise Kohlendioxid, Aceton, Kohlenwasserstoffe, wie n-, iso- oder Cyclopentan, Cyclohexan oder halogenierte Kohlenwasserstoffe, wie Methylenchlorid, Tetrafluorethan, Pentafluorpropan, Heptafluorpropan, Pentafluorbutan, Hexafluorbutan oder Dichlormonofluorethan, eingesetzt werden. Die Menge des physikalischen Treibmittels liegt dabei vorzugsweise im Bereich zwischen 1 bis 15 Gew.-Teilen, insbesondere 1 bis 10 Gew.-Teilen, die Menge an Wasser vorzugsweise im Bereich zwischen 0,5 bis 10 Gew.-Teilen, insbesondere 1 bis 5 Gew.-Teilen bezogen auf 100 Gew.-Teile Polyol bzw. Polyolkomponente. Kohlendioxid wird von den physikalischen Treibmittel bevorzugt, und wird besonders bevorzugt in Kombination mit Wasser als chemischem Treibmittel verwendet. In dem Verfahren zur Herstellung von Polyurethanschaum gemäß der vorliegenden Erfindung werden vorzugsweise keine halogenierten Kohlenwasserstoffe als (physikalische) Treibmittel eingesetzt.

### Gegebenfalls vorhandene Additive

Als gegebenenfalls weitere vorhandene Additive kann die Reaktionsmischung z. B. Flammschutzmittel aufweisen, bevorzugt solche, die flüssig und/oder in einer oder mehreren der zur Polyurethanschaumherstellung eingesetzten Komponenten löslich sind. Bevorzugt kommen handelsübliche phosphorhaltige Flammschutzmittel zum Einsatz, beispielsweise Trikresylphosphat, Tris(2-chlorethyl)phosphat, Tris(2-chlorpropyl)phosphat, Tris(2,3-dibrompropyl)phosphat, Tris- (1,3-dichlorpropyl)phosphat, Tetrakis(2-chlorethyl)ethylendiphosphat, Trisbutoxyethylphosphat, Dimethylmethanphosphonat, Diethylethanphosphonat, Diethanolaminomethylphosphonsäurediethylester. Ebenfalls geeignet sind halogen- und/oder phosphorhaltige, flammschützend wirkende Polyole und/oder Melamin. Die Flammschutzmittel werden bevorzugt in einer Menge von maximal 35 Gew.-%, bevorzugt maximal 20 Gew.-%, bezogen auf die Polyolkomponente, eingesetzt.

Weitere Beispiele von gegebenenfalls vorhandenen Additiven sind z. B. oberflächenaktive Zusatzstoffe und Schaumstabilisatoren sowie Zellregler, Reaktionsverzögerer, Stabilisatoren, flammhemmende Substanzen, Farbstoffe sowie fungistatisch und bakteriostatisch wirksame Substanzen. Einzelheiten über Verwendungs- und Wirkungsweise dieser Zusatzmittel sind in G. Oertel, Polyurethane Handbook, 2nd edition, Hanser/Gardner Publications Inc., Cincinnati, Ohio, 1994, p. 55-127, beschrieben.

Das Verfahren zur Herstellung von Polyurethanschaum, bei dem erfindungsgemäß das Disalz der Apfelsäure verwendet wird, kann z. B. auf Niederdruck- oder auf Hochdruckmaschinen durchgeführt werden. Die technischen Ausführungen derartiger Maschinen können der Literatur entnommen werden: G. Oertel, Polyurethane Handbook, 2nd edition, Hanser/Gardner Publications Inc., Cincinnati, Ohio, 1994, p. 129-171 and 178-186

Die Zugabe des Disalzes der Apfelsäure zum Reaktionsgemisch kann z. B. separat in die Mischkammer/den Mischkopf erfolgen. Das Disalz der Apfelsäure kann aber auch schon vor der Mischkammer/dem Mischkopf einer der danach der Mischkammer zugeführten Komponenten zugemischt werden. Die Zumischung kann bereits im Lagergefäß der Rohstoffe, insbesondere der Polyolkomponente erfolgen. Wird der Polyurethanschaum auf Hochdruckmaschinen erzeugt, erfolgt die Zugabe des Disalzes der Apfelsäure oder einer Lösung davon vorzugsweise direkt in den Mischkopf.

Die Herstellung des Polyurethanschaums, insbesondere des Polyurethanheißweichschaums, unter Zugabe von dem Disalz der Apfelsäure kann in kontinuierlicher oder auch in diskontinuierlicher Weise erfolgen. Vorzugsweise erfolgt die Herstellung kontinuierlich.

Der Schäumungsprozess bei der Herstellung des Polyurethanschaums kann sowohl in horizontaler als auch in vertikaler Richtung erfolgen. Die Verschäumung kann auch direkt in Formen erfolgen.

Der erfindungsgemäße Polyurethanschaum mit einer Glasübergangstemperatur von -20 °C bis +15 °C, ist dadurch gekennzeichnet, dass der Polyurethanschaum Disalze der Äpfelsäure oder deren Umsetzungsprodukte mit einer Isocyanatkomponente aufweist, wobei der Anteil der Disalze und deren Umsetzungsprodukte mit einer Isocyanatkomponente kleiner 0,08 Gew.-% bezogen auf den Polyurethanschaum beträgt.

Vorzugsweise ist der erfindungsgemäße Polyurethanschaum ein viskoelastischer Polyurethanschaum oder ein Polyurethanheißweichschaumstoff, insbesondere ein auf Polyetherpolyolen basierender Polyurethanheißweichschaum.

Der erfindungsgemäße Polyurethanschaum weist vorzugsweise eine Rückprallelastizität gemessen im Kugelfallversuch gemäß DIN EN ISO 8307 von kleiner 10 %, bevorzugt von 0,5 bis 7,5 % auf.

Die Gasdurchlässigkeit des erfindungsgemäßen Polyurethanschaums, insbesondere das Polyurethanheißweichschaums, beträgt vorzugsweise von 1 bis 300 mm Wassersäule, bevorzugt 7 bis 25 mm Wassersäule in Anlehnung an DIN ISO 4638 (gemessen durch Messung der Druckdifferenz bei der Durchströmung einer Schaumprobe. Hierfür wird eine 5 cm dicke Schaumscheibe auf eine glatte Unterlage gelegt. Eine 800 g schwere Platte (10 cm x 10 cm) mit zentraler Bohrung (Durchmesser 2 cm) und einem Schlauchanschluß wird auf der Schaumprobe platziert. Über die zentrale Bohrung wird ein konstanter Luftstrom von 8 I/min in die Schaumprobe geleitet. Die auftretende Druckdifferenz (relativ zu ungehindertem Ausströmen) wird mittels einer Wassersäule in einem graduierten Druckmesser ermittelt. Je geschlossener der Schaum ist, desto mehr Druck wird aufgebaut und desto mehr wird der Spiegel der Wassersäule nach unten gedrückt und desto größere Werte werden gemessen).

Der erfindungsgemäße Polyurethanschaum kann ein Blockschaum oder ein Formschaum sein.

Der erfindungsgemäße Polyurethanschaum, insbesondere der Polyurethanheißweichschaumstoff weist gemäß DIN 7726 bei Druckbeanspruchung vorzugsweise einen Verformungswiderstand von kleiner 15 kPa auf (gemessen gemäß DIN 53421).

Der erfindungsgemäße Polyurethanschaum, insbesondere Polyurethanheißweichschaum weist bei einer 40 %-igen Kompression eine Druckspannung von 0,1 kPa bis 5 kPa, bevorzugt 0,5 bis 2 kPa, bestimmt gemäß DIN EN ISO3386-1/2 auf.

Die Zellstruktur des erfindungsgemäßen Polyurethanschaums, insbesondere des Polyurethanheißweichschaums ist dabei vorzugsweise zu mehr als 80 % offenzellig (gemessen gemäß DIN ISO 4590).

Die Dichte des erfindungsgemäßen Polyurethanschaums, insbesondere des Polyurethanheißweichschaums liegt vorzugsweise bei 15 bis 100 kg/m², bevorzugt bei 30 bis 80 kg/m² und besonders bevorzugt bei 40 bis 70 kg/m² (gemessen nach DIN EN ISO 845, DIN EN ISO 823).

Die Porenstruktur (mittlere Zahl der Zellen pro 1 cm) beträgt im erfindungsgemäßen Polyurethanschaum vorzugsweise von 5 bis 25 Zellen/cm und wird auf einer Schnittfläche optisch bestimmt (gemessen gemäß DIN EN 15702).

Bevorzugte erfindungsgemäße Polyurethanschäume sind solche bei denen zwei oder mehr der oben genannten bevorzugten Parameter, vorzugsweise alle der oben genannten Parameter, in bevorzugt dem engsten angegebenen Bereich vorliegen.

Die erfindungsgemäßen Polyurethanschäume können zur Herstellung von erfindungsgemäßen Erzeugnissen genutzt werden. Diese erfindungsgemäßen Erzeugnisse, weisen erfindungsgemäße Polyurethanschäume auf oder enthalten diese. Entsprechende Erzeugnisse können z. B. Matratzen oder Kissen sein.

Weitere Gegenstände und Ausführungsformen der Erfindung ergeben sich aus den Ansprüchen, deren Offenbarungsgehalt vollumfänglich Teil der Beschreibung ist.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Ausprüfung

Bei den anwendungstechnischen Tests wurde eine typische Formulierung eines viskoelastischen Polyurethanschaums, die sich wie folgt zusammensetzt, verwendet:
- 30 Gew. Teile Polyol Voranol® CP 3322 (marktübliches Polyol der Firma DOW)
- 70 Gew. Teile Polyol Voranol® CP 755 (marktübliches Polyol der Firma DOW)
- 7 Gew. Teile Polyol Voranol® CP 1421 (marktübliches Polyol der Firma DOW)
- 1,95 Gew. Teile Wasser
- 0,2 Gew. Teile TEGOAMIN® BDE (Bis(dimethylaminoethyl)etherlösung, Aminkatalysator der Firma EVONIK Industries AG)
- 0,3 Gew. Teile TEGOAMIN® 33 (Triethylendiaminlösung, Aminkatalysator der Firma EVONIK Industries AG)
- 0,2 Gew. Teile TEGOAMIN® DMEA (Dimethylethanolaminlösung, Aminkatalysator der Firma EVONIK Industries AG)
- 0,07 Gew. Teile KOSMOS® 29 (Zinn(II) 2-ethylhexanoat, Zinnkatalysator der Firma EVONIK Industries AG)
- variable Menge (von 0 bis 0,5 Gew. Teile) der zu prüfenden Additive zur Verschiebung der Glasübergangstemperatur, wobei das erfindungsgemäße Dinatriummalat sowie Propylengkylkol, n-Butanol, Glyzerin, Natriumlactat, Natriumcitrat, Natriumtartrat, Natriumsuccinat, Natriummalonat, und Natriumacetat als nicht erfindungsgemäße Additive verwendet wurden,
- 0,1 Gew.Teile ORTEGOL® 76 (Zellöffner der Firma EVONIK Industries AG)
- 1,1 Gew. Teile TEGOSTAB® BF 2470 (Schaumstabilisator der Firma EVONIK Industries AG)
- 40,3 Gew.Teile Toluylendiisocyanat (TDI 80) (für einem Index von 85, entsprechend höhere Mengen für einen Index von 90 oder 95).

### Durchführung der Ausprüfung der zu testenden Schaumstabilisatoren:

In einem Pappbecher wurden der Zinnkatalysator Zinn(II)-2-ethylhexanoat, die drei Polyole, das Wasser, die drei Aminkatalysatoren und gegebenenfalls das Additiv zur Verschiebung des Glaspunktes vorgelegt und für 60s mit einem Scheibenrührer bei 1000 U/min vermischt.

Anschließend wurde das Isocyanat zugegeben und mit dem gleichen Rührer für 7s bei 1500 U/min eingearbeitet. Dabei begann die Mischung im Becher aufzuschäumen. Deshalb wurde sie direkt nach dem Ende des Rührens in eine Verschäumungsbox gegossen. Diese hat eine Grundfläche von 17 x 17 cm und eine Höhe von 30 cm. Nach Außen verhinderte eine 5 cm dicke Isolierung aus PU-Schaum ein zu schnelles Abkühlen. Innen war die Box mit einer Kunststofffolie ausgelegt, um den ausgehärteten Schaum anschließend entnehmen zu können. Der Schaum stieg nach dem Eingießen in der Verschäumungsbox auf. Im Idealfall blies der Schaum bei Erreichen der maximalen Steighöhe ab und sackt dann leicht zurück.

Dabei öffneten sich die Zellmembrane der Schaumbläschen und eine offenporige Zellstruktur des Schaumstoffs wurde erhalten. Bei einer zu geringen Stabilisierungswirkung kollabierte der PU-Schaum vor Erreichen der maximalen Steighöhe. Im Falle einer zu starken Stabilisierung stieg der Schaum sehr lange und blies nicht ab. Bedingt durch die dann sehr geschlossene Zellstruktur schrumpfte der Schaum beim anschließenden Abkühlen durch die Volumenkontraktion des sich abkühlenden Gases.

### Beobachtungen:

Der Schaum stieg auf, blies nach ca. 2 min ab und veränderte sich beim nachfolgenden Abkühlen nicht. Bei der nachfolgenden Untersuchung wurde eine Zellzahl von 7 Zellen/cm und eine Porosität von 180 bis 290 mm gemessen (Staudruckmessung, ermittelt wurde die Höhe einer Wassersäule, die einen äquivalenten Druck erzeugt) ermittelt. Dies veranschaulicht eine ausreichend feine und offene Zellstruktur (von geschlossenen Schäumen spricht man ab etwa 300 mm). Der Schaum wies die gewünschten viskoelastischen Eigenschaften auf. Aus der Mitte des ausgehärteten Weichschaumstoffs wurde nach 3 Tagen eine Probe entnommen für die Messung der DSC-Kurve. Dafür werden 15-25 mg des Weichschaumstoffs in ein Metallpfännchen gepresst und die DSC Kurve von -70 bis 100°C bei einer Heizrate von 10°C/min gemessen. Der Wärmefluß in die Probe wurde ermittelt und graphisch aufgetragen. Für die Auswertung wurde die 1. Heizkurve verwendet. In dieser wurde der Wendepunkt des Glasübergangs ermittelt. Die zugehörige Temperatur wurde als Glasübergangstemperatur gewertet.

Die Ergebnisse der Verschäumungen der Reaktionsprodukte sind in den nachfolgenden Tabellen 1 bis 3 angegeben.

In Tabelle 1 wurden Schäume ohne Verwendung eines Additivs zur Verschiebung der Glasübergangstemperatur hergestellt.

**Tabelle 1: Einfluss des Verhältnisses von Isocyanatgruppen zu isocyanatverbrauchenden Gruppen (Index) auf die Verschäumungseigenschaften**

| **Index []** | **Steigzeit [s]** | **Steighöhe [cm]** | **Rückfall [cm]** | **Porosität [mm]** | **Stauchhärte (CLD 40%) [kPa]** | GT* [°C] |
|---|---|---|---|---|---|---|
| 80 | 167 | 33,8 | -0,3 | 200 | 0,6 | -17,0 |
| 85 | 151 | 34,4 | -0,5 | 250 | 0,8 | -13,2 |
| 90 | 135 | 35,5 | -0,5 | 250 | 1,3 | -6,9 |
| 95 | 122 | 36,4 | -0,8 | 290 | 2,3 | -1,6 |

| | | | | | | |
|---|---|---|---|---|---|---|
| *GT = Glasübergangstemperatur | | | | | | |

Wie Tabelle 1 entnommen werden kann, steigt die Glasübergangstemperatur mit Erhöhung des Index an, wobei sich gleichzeitig aber die Steigzeiten und auch die Schaumeigenschaften, insbesondere die Stauchhärten verändern.

In Tabelle 2 sind die Einsatzmengen und Ergebnisse für die hergestellten Vergleichsschäume angegeben, bei denen nicht erfindungsgemäße Additive eingesetzt wurden. Es wurde jeweils ein Index von 85 verwendet.

**Tabelle 2: Einfluss von Vergleichssubstanzen auf die Verschäumungseigenschaften**

| Additiv [] | Einsatzmenge [**] | Steigzeit [s] | Steighöhe [cm] | Rückfall [cm] | Porosität [mm] | Stauchhärte (CLD 40%) [kPa] | GT [°C] |
|---|---|---|---|---|---|---|---|
| Referenz | 0 | 151 | 34,4 | -0,5 | 250 | 0,8 | -13,2 |
| Propylenglykol | 0,1 | 152 | 34,8 | -0,4 | 263 | 0,8 | -13,3 |
| Propylenglykol | 0,5 | 147 | 35,2 | -0,3 | 280 | 0,9 | -13,5 |
| n-Butanol | 0,1 | 149 | 34,9 | -0,5 | 247 | 0,75 | -13,5 |
| n-Butanol | 0,5 | 145 | 34,8 | -0,2 | 240 | 0,7 | -14,3 |
| Glycerin | 0,1 | 147 | 34,6 | -0,4 | 256 | 0,85 | -13 |
| Glycerin | 0,5 | 138 | 35 | -0,3 | 290 | 1,05 | -12,3 |
| Na-lactat | 0,1 | 152 | 35,9 | -0,1 | 220 | 0,8 | -14,4 |
| Na-lactat | 0,5 | 149 | 35,7 | -0,1 | 286 | 0,75 | -15 |
| Na-citrat | 0,1 | 149 | 34 | -0,1 | 236 | 0,75 | -8,7 |
| Na-citrat | 0,5 | 193 | 33,3 | -0,2 | 241 | 0,65 | -7,5 |
| Na-tartrat | 0,1 | 181 | 34,5 | -0,2 | 254 | 0,7 | -9,9 |
| Na-tartrat | 0,5 | 181 | 34,6 | -0,2 | 189 | 0,7 | -9,7 |
| Na-succinat | 0,1 | 136 | 34,6 | 0 | 291 | 0,8 | -13 |
| Na-succinat | 0,5 | 126 | 35 | 0 | 300 | 0,9 | -13,5 |
| Na-malonat | 0,1 | 135 | 34,8 | -0,1 | 267 | 0,75 | -11,7 |
| Na-malonat | 0,5 | 145 | 35,4 | -0,1 | 289 | 0,7 | -10,4 |
| Na-acetat | 0,1 | 125 | 34,8 | -0,2 | 290 | 0,8 | -13,5 |
| Na-acetat | 0,5 | 45 | 34 | -0,2 | 300 | 0,9 | -13,6 |

| | | | | | | | |
|---|---|---|---|---|---|---|---|
| ** in Massen-Teile pro 100 Teile Polyol | | | | | | | |

Es ist Tabelle 2 leicht zu entnehmen, dass der Einsatz der nicht erfindungsgemäßen Additive entweder keinen oder nur einen geringen Einfluss auf die Glasübergangstemperatur hat oder die Glasübergangstemperatur angehoben wird. Es wurden keine Additive identifiziert, welche die Glastemperatur signifikant absenken.

In Tabelle 3 sind die Einsatzmengen und Ergebnisse für die hergestellten erfindungsgemäßen Schäume angegeben, bei denen Dinatriummalat eingesetzt wurde. Es wurde wiederum jeweils ein Index von 85 verwendet.

**Tabelle 3: Einfluss von Dinatriummalat auf die Verschäumungseigenschaften**

| Einsatzmenge Dinatriummalat [Massen-Teile pro 100 Teile Polyol] | Steigzeit [s] | Steighöhe [cm] | Rückfall [cm] | Porosität [mm] | Stauchhärte (CLD 40%) [kPa] | GT [°C] |
|---|---|---|---|---|---|---|
| 0 | 151 | 34,4 | -0,5 | 250 | 0,8 | -13,2 |
| 0,04 | 155 | 34,9 | -0,4 | 233 | 0,6 | -15,9 |
| 0,08 | 153 | 34,8 | -0,3 | 186 | 0,6 | -17,4 |
| 0,12 | 154 | 34,9 | -0,3 | 205 | 0,6 | -18,7 |

Wie der Tabelle 3 entnommen werden kann, führt der erfindungsgemäße Einsatz von Dinatriummalat zu einer erheblichen Absenkung der Glasübergangstemperatur, ohne dass eine wesentliche Beeinflussung der übrigen Schaumeigenschaften, insbesondere der Stauchhärte zu beobachten ist. Die Steigzeit bleibt bei Zusatz von Dinatriummalat im Wesentlichen unverändert. Der Porositätswert sinkt leicht, was eine leicht höhere Luftdurchlässigkeit anzeigt. Dies kann als Vorteil für die Verwendung in Matratzen und Kissen gewertet werden.

## Patentansprüche

1. Verwendung eines Disalzes der Äpfelsäure bei der Herstellung von Polyurethanschaum, wobei das Disalz der Äpfelsäure der Reaktionsmischung, welche zumindest eine Polyolkomponente, eine Isocyanatkomponente, einen Katalysator, der die Ausbildung einer Urethan- oder Isocyanurat-Bindung katalysiert, ein Treibmittel und gegebenenfalls weitere Additive aufweist, zugegeben wird, zur Absenkung der Glasübergangstemperatur des erhaltenen Polyurethanschaums.

2. Verwendung nach Anspruch 1, **dadurch gekennzeichnet, dass** das Disalz der Äpfelsäure in einer Konzentration von größer 0 bis kleiner 0,1 Massen-Teilen bezogen auf 100 Massen-Teile Polyolkomponente zugegeben wird.

3. Verwendung nach Anspruch 1 oder 2, **dadurch gekennzeichnet, dass** als Disalz der Äpfelsäure das Dinatriumsalz eingesetzt wird.

4. Verwendung nach mindestens einem der Ansprüche 1 bis 3, **dadurch gekennzeichnet, dass** als Disalz der Äpfelsäure das Disalz der L-Hydroxybernsteinsäure eingesetzt wird.

5. Verwendung nach mindestens einem der Ansprüche 1 bis 4, **dadurch gekennzeichnet, dass** das Disalz der Äpfelsäure in Form einer 5 bis 25 Gew.-% Lösung des Disalzes in Wasser, Dipropylenglykol, Propylenglykol, Butyldiglykol, Ethanol, Isopropanol, Ethylenglykol, Diethylenglykol, Polyether und/oder Polyol dem Reaktionsgemisch zugegeben wird.

6. Verwendung nach mindestens einem der Ansprüche 1 bis 5, **dadurch gekennzeichnet, dass** das Disalz der Äpfelsäure in Form einer 1 bis 50 Gew.-% Lösung des Disalzes in einer Mischung enthaltend Wasser und Dipropylenglykol in einem Massenverhältnis von 0,5 zu 1 bis 1 zu 0,5 eingesetzt wird.

7. Polyurethanschaum mit einer Glasübergangstemperatur, gemessen wie in der Beschreibung angegeben, von -20 °C bis 15 °C, **dadurch gekennzeichnet, dass** der Polyurethanschaum Disalze der Äpfelsäure oder deren Umsetzungsprodukte mit einer Isocyanatkomponente aufweist, wobei der Anteil der Disalze und deren Umsetzungsprodukte mit einer Isocyanatkomponente kleiner 0,08 Gew.-% bezogen auf den Polyurethanschaum beträgt.

8. Polyurethanschaum nach Anspruch 7, **dadurch gekennzeichnet, dass** der Polyurethanschaum ein viskoelastischer Polyurethanschaum ist.

9. Polyurethanschaum nach Anspruch 7 oder 8, **dadurch gekennzeichnet, dass** der Polyurethanschaum eine Rückprallelastizität von kleiner 10 % aufweist.

10. Erzeugnis enthaltend einen Polyurethanschaum gemäß einem der Ansprüche 7 bis 9.

11. Erzeugnis nach Anspruch 10, **dadurch gekennzeichnet, dass** es sich um eine Matratze oder ein Kissen handelt.

## Claims

1. Use of a disalt of malic acid in the production of a polyurethane foam to lower the glass transition temperature of the polyurethane foam obtained, wherein the disalt of malic acid is added to the reaction mixture comprising at least a polyol component, an isocyanate component, a catalyst to catalyse urethane or isocyanurate bond formation, an optional blowing agent and optionally further additives.

2. Use according to Claim 1, **characterized in that** the disalt of malic acid is added in a concentration of above 0 to below 0.1 part by mass per 100 parts by mass of polyol component.

3. Use according to Claim 1 or 2, **characterized in that** the disodium salt of malic acid is used.

4. Use according to one or more of Claims 1 to 3, **characterized in that** the disalt of L-hydroxysuccinic acid is used as disalt of malic acid.

5. Use according to one or more of Claims 1 to 4, **characterized in that** the disalt of malic acid is added to the reaction mixture as a 5 to 25 wt% solution of the disalt in water, dipropylene glycol, propylene glycol, butyldiglycol, ethanol, isopropanol, ethylene glycol, diethylene glycol, polyether and/or polyol.

6. Use according to one or more of Claims 1 to 5, **characterized in that** the disalt of malic acid is used as a 1 to 50wt% solution of the disalt in a mixture comprising water and dipropylene glycol in a mass ratio of 0.5:1 to 1:0.5.

7. Polyurethane foam having a glass transition temperature, measured as stated in the description, of -20°C to 15°C, **characterized in that** the polyurethane foam comprises disalts of malic acid or reaction products thereof with an isocyanate component, wherein the fraction accounted for by the disalts and the reaction products thereof with an isocyanate component is below 0.08 wt% based on the polyurethane foam.

8. Polyurethane foam according to Claim 7, **characterized in that** the polyurethane foam is a viscoelastic polyurethane foam.

9. Polyurethane foam according to Claim 7 or 8, **characterized in that** the polyurethane foam has a rebound resilience of below 10%.

10. Article of manufacture comprising a polyurethane foam according to any of Claims 7 to 9.

11. Article of manufacture according to Claim 10, **characterized in that** a mattress or pillow is concerned.

## Revendications

1. Utilisation d'un sel double de l'acide malique lors de la préparation de mousse de polyuréthane, le sel double de l'acide malique étant ajouté au mélange réactionnel, qui présente au moins un composant de polyol, un composant d'isocyanate, un catalyseur, qui catalyse la formation d'une liaison uréthane ou isocyanurate, un agent propulseur et éventuellement d'autres additifs, pour l'abaissement de la température de transition vitreuse de la mousse de polyuréthane obtenue.

2. Utilisation selon la revendication 1, **caractérisée en ce que** le sel double de l'acide malique est ajouté en une concentration de supérieure à 0 à inférieure à 0,1 partie en masse par rapport à 100 parties en masse de composant de polyol.

3. Utilisation selon la revendication 1 ou 2, **caractérisée en ce que**, en tant que sel double de l'acide malique, le sel double de sodium est utilisé.

4. Utilisation selon au moins l'une des revendications 1 à 3, **caractérisée en ce que**, en tant que sel double de l'acide malique, le sel double de l'acide L-hydroxysuccinique est utilisé.

5. Utilisation selon au moins l'une des revendications 1 à 4, **caractérisée en ce que** le sel double de l'acide malique est ajouté au mélange réactionnel sous forme d'une solution à 5 à 25 % en poids du sel double dans l'eau, le dipropylèneglycol, le propylèneglycol, le butyldiglycol, l'éthanol, l'isopropanol, l'éthylèneglycol, le diéthylèneglycol, un polyéther et/ou un polyol.

6. Utilisation selon au moins l'une des revendications 1 à 5, **caractérisée en ce que** le sel double de l'acide malique est utilisé sous forme d'une solution à 1 à 50 % en poids du sel double dans un mélange d'eau et de dipropylèneglycol en un rapport de masses de 0,5 sur 1 à 1 sur 0,5.

7. Mousse de polyuréthane comportant une température de transition vitreuse, mesurée comme indiqué dans la description, de -20 °C à 15 °C, **caractérisée en ce que** la mousse de polyuréthane présente des sels doubles de l'acide malique ou leurs produits de transformation avec un composant d'isocyanate, la proportion des sels doubles et de leurs produits de transformation avec un composant d'isocyanate étant inférieure à 0,08 % en poids par rapport à la mousse de polyuréthane.

8. Mousse de polyuréthane selon la revendication 7, **caractérisée en ce que** la mousse de polyuréthane est une mousse de polyuréthane viscoélastique.

9. Mousse de polyuréthane selon la revendication 7 ou 8, **caractérisée en ce que** la mousse de polyuréthane présente une résilience inférieure à 10 %.

10. Article contenant une mousse de polyuréthane selon l'une quelconque des revendications 7 à 9.

11. Article selon la revendication 10, **caractérisé en ce que** c'est un matelas ou un coussin.
